# EUROPEAN PATENT SPECIFICATION

(11) **EP 0 469 552 B1**
(45) Date of publication and mention of the grant of the patent: **09.07.1997**
(21) Application number: 91112802.3
(22) Date of filing: 30.07.1991
(51) Int. Cl.: G11B 7/12, G11B 7/135, G11B 11/10

(54) **Optical pickup device**
Optisches Wiedergabegerät
Appareil de reproduction optique

(30) Priority: 31.07.1990 JP 201450/90; 31.07.1990 JP 204367/90; 21.09.1990 JP 250079/90; 15.03.1991 JP 74195/91; 15.03.1991 JP 74196/91
(43) Date of publication of application: 05.02.1992
(73) Proprietor: OMRON CORPORATION, Kyoto-shi, Kyoto-fu 617 (JP)
(72) Inventor: Horie, Noriyoshi, c/o Omron Corporation, Nagaokakyo-shi, Kyoto 617 (JP); Ohgaki, Tatsuo, c/o Omron Corporation, Nagaokakyo-shi, Kyoto 617 (JP); Hosokawa, Hayami, c/o Omron Corporation, Nagaokakyo-shi, Kyoto 617 (JP); Tada, Masami, c/o Omron Corporation, Nagaokakyo-shi, Kyoto 617 (JP); Yamashita, Tsukasa, c/o Omron Corporation, Nagaokakyo-shi, Kyoto 617 (JP)
(74) Representative: WILHELMS, KILIAN & PARTNER Patentanwälte

(56) References cited:
- EP-A- 0 174 008
- EP-A- 0 280 208
- PATENT ABSTRACTS OF JAPAN, unexamined applications, P field, vol. 7, no. 245, October 29, 1983 THE PATENT OFFICE JAPANESE GOVERNMENT page 95 P 233

## Description

### BACKGROUND OF THE INVENTION

### Field of the Invention

The present invention relates to an optical device for extracting information represented by polarized light coming from an optical object, such as an optical recording medium.

In the present description, the optical recording medium includes in addition to an optical recording medium such as an optical disk or an optical card, a magnetooptical recording medium such as a magnetooptical disk or a magnetooptical card.

Moreover, the optical pickup device according to the present invention may naturally be used not only to read data from the optical recording medium but also to write data thereon.

### Description of Related Art

In the prior art, an optical pickup device includes constituent elements such as a first optical system for collimating light irradiated from a semiconductor laser, a second optical system for focusing the collimated light onto an optical recording medium and for collimating light reflected from the optical recording medium, a first polarization beam splitter for separating through polarization the reflection light thus collimated by the second optical system, a second polarization beam splitter for separating the light from the first polarization beam splitter into tracking control light and focusing control light, a third optical system for focusing the separated tracking control light onto a light receiving surface of a tracking control photosensor, a fourth optical system for focusing the separated focusing control light onto a light receiving surface of a focusing control photosensor, and a fifth optical system disposed in the third or fourth optical system for guiding light to a photosensor producing a readout signal.

The conventional optical pickup device of this type is ordinarily constituted with a large number of optical parts and hence is heavy, which leads to a problem of a slow access time. In addition, due to the large number of optical parts, the cost thereof is increased and assemblage and adjustment of these parts take a great amount of human labor and a long period of time, which also leads to the problem that the cost of the final product is increased.

In order to solve the problems above, there have been intensive researches and studies to implement a compact and light-weight optical pickup for a magnetooptical disk based on the optical integration technology. For example, according to an optical pickup device described in an article "Waveguide-Type Differential Detection Device for Magnetooptical Disk Pickup", Sunagawa et al., Institute of Electronics, Information, and Communication Engineers of Japan, Quantum Electronics Study Group 0QE86-177, a plurality of focusing grating couplers respectively exciting light in the transverse magnetic (TM) and transverse electric (TE) modes are formed on a waveguide layer manufactured on a substrate. A light reflected from a magnetooptical disk is guided by the focusing grating couplers into the waveguide layer; moreover, the light is separated to be converged depending on the modes. The resultant reflection light is sensed so as to produce a tracking error signal, a focusing error signal, and an information readout signal.

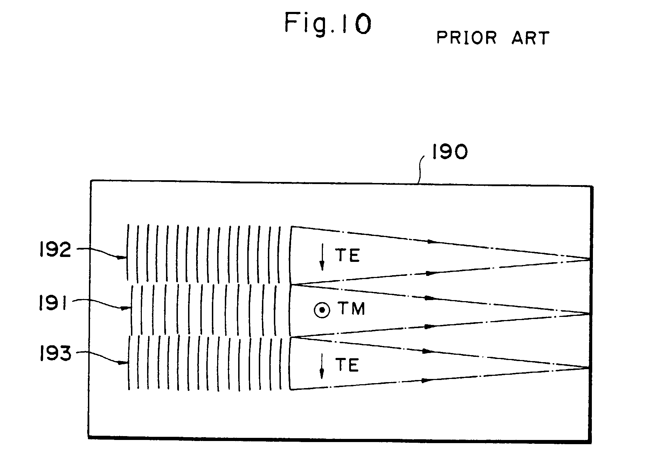

Fig. 10 shows the focusing grating couplers described in the article above. In the configuration, three focusing grating couplers 191, 192, and 193 are fabricated side by side on a waveguide layer formed on a substrate 190. The reflection light from the magnetooptical disk is irradiated onto the focusing grating couplers 191 to 193 from a position thereabove with a right incident angle or an oblique incident angle. These focusing grating couplers are manfactured such that the coupler 191 has a grating period slightly larger than those of the couplers 192 and 193 so as to excite a light in the TM mode and the couplers 192 and 193 excite a light in the TE mode. The light reflected from the magnetooptical disk is represented as a composite vector including a P component (Ep) and an S component (Es) of the electric field. The Ep component of the reflection light satisfies the phase matching condition in the focusing grating coupler 191, which leads to an excitation of the TM mode light. On the other hand, for the Es component thereof, the phase matching condition holds in the focusing grating couplers 192 and 193, which hence cause an excitation of the TE mode light. For the Ep component, a light coupling rarely takes place in the grating couplers 192 and 193; whereas, for the Es component, the optical coupling hardly occurs in the coupler 191. With this provision, the Ep and Es components of the light reflected from the magnetooptical disk are separated through the coupler 191 and the couplers 192 and 193, respectively so as to be focused on the respective focal points (on a wavefguide layer or on an end surface of the substrate 190). Each focused light is received by a photosensor associated therewith. Based on signals produced from the photosensors related to that light, the system creates a readout signal, a focusing error signal, and a tracking error signal.

In the focusing grating couplers above, the two kinds of waveguide modes, namely, the TM and TE modes are excited only in the respective separated regions. More specifically, the light in the TM and TE modes is excited only in the region of the coupler 191 and in the area of the couplers 192 and 193, respectively. This leads to a problem of deterioration of the light utilization efficiency. Although the light reflected from the magnetooptical disk is illuminated onto the entire region of the focusing grating couplers 191 to 193, the optical coupling of the light with the waveguide layer takes place only in some portions of the region. Consequently the quantity of the reflection light incident to the photosensors is decreased and hence it is difficult to detect various kinds of signals in a stable condition.

Furthermore, due to a variation in the wavelength of light illuminated from the light source, an increase or a decrease in the size of each grating with respect to a change in the temperature, or the like, light in other than the TM mode may be excited by the focusing grating coupler 191 and/or the light excitation may take place for light other than the TE mode in the couplers 192 and 193. As a result, the system cannot satisfactorily accomplish the mode separation and hence there arises a problem that the various types of signals cannot be sensed with a satisfactorily high precision.

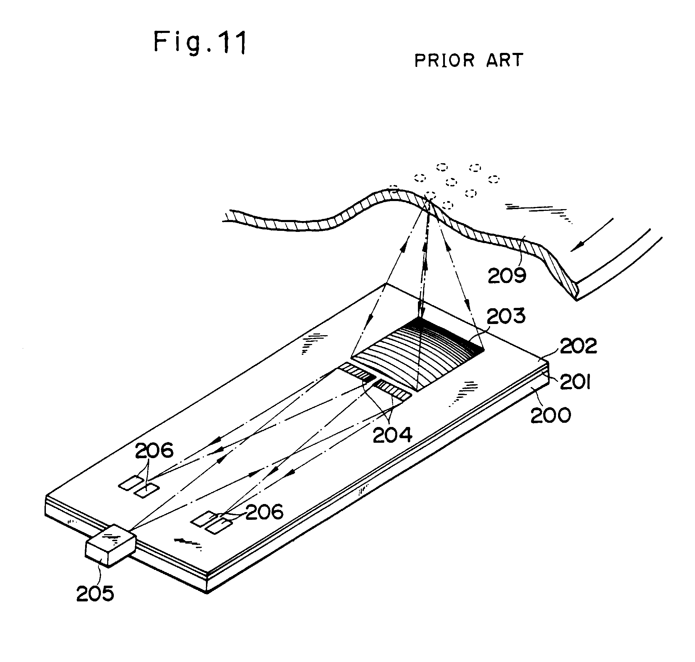

In this regard, there has been also proposed a compact light-weight pickup device for an optical disk similarly employing the optical integration technology. Such a pickup device has been described, for example, in an article "An Integrated-Optic Disk Pickup Device", S. Ura et al., Institute of Electronics, Information, and Communication Engineers of Japan, Quantum Electronics Study Group 0QE85-72. Fig. 11 shows a portion of the optical pickup device. In this structure, on an SiO₂ buffer layer 201 manufactured on a silicon substrate 200, a waveguide layer 202 is formed with a glass material. On the waveguide layer 202, a focusing grating coupler 203 and a waveguide beam splitter (grating) 204 are manufactured in a chirped structure by use of a patterning technology based on an electron beam lithography and a reactive ion etching technology. In operation, a laser diode 205 disposed on an end surface of the substrate 200 emits light, which propagates through the waveguide layer 202 to be irradiated to an upward direction by the focusing grating coupler 203 so as to be focused onto a surface of an optical disk 209. Light reflected from the surface of the optical disk 209 is passed via the focusing grating coupler 203 to be optially coupled with the waveguide 202 and is then separated by the waveguide beam splitter 204 into two portions, which are respectively converged therethrough to be received by respective partitions of a two-partition photoelectric converter element 206. Based on signals created from the photoelectric converter 206, there are generated a readout signal, a focusing error signal, and a tracking signal. In this constitution, the waveguide beam splitter 204 develops three functions including a separation of a wave surface or wavefront, deflection of an incident light, and focusing or converging the light. Through the operation above, the system reads information recorded in the form of a pit string on a surface of the optical disk 209.

In the optical pickup device of this kind, the light radiated from the laser diode 205 passes twice through the waveguide beam splitter 204 and the focusing grating coupler 203 before the light is received by the photoelectric converter 206, namely, the light passes these units each time the light proceeds in a direction from the laser diode 205 to the optical disk 209 and in a direction from the disk 209 to the photoelectric conversion element 206. Consequently, the light passes a grating structure four times before the light is sensed. Namely, the light received by the photoelectric converter 206 becomes to be considerably weak and hence a signal produced therefrom has a minimized intensity. Moreover, due to an alteration in the waveform of the light emitted from the laser diode as the light source and a deviation in the period or cycle of each grating caused by a change in the temperature or the like, there particularly occurs a fluctuation in a focusing position of the light incident to the photoelectric conversion element 206. As a result, there arises a problem that various kinds of signals cannot be sensed in a stable state.

An optical device according to the preamble of claim 1 is known from JP-A-61 003 330.

### SUMMARY OF THE INVENTION

It is therefore an object of the present invention to provide an optical device of the type above for an optical pickup device in which a tracking error signal, a focusing error signal, and an information readout signal are obtained with a high stability and an increased accuracy.

In accordance with the present invention, there is provided an optical device as defined in claim 1.

### BRIEF DESCRIPTION OF THE DRAWINGS

Fig. 1 is a schematic diagram showing the constitution of an optical system used in an optical pickup head of an information recording and reproducing apparatus for a magnetooptical disk;
Figs. 2a and 2b are perspective views showing the configuration of a photosensor;
Fig. 3 is a diagram showing the structure of an optical system adopted in an optical pickup head of an information recording and reproducing apparatus for a magnetooptical disk ;
Fig. 4 is a schematic diagram showing the construction of an optical system adopted in an optical pickup head of an information recording and reproducing apparatus for a magnetooptical disk in a first embodiment according to the present invention;
Fig. 5 is a magnified perspective view showing a composite polarization beam splitter utilized in the optical system of the first embodiment;
Fig. 6 is a diagram showing the constitution of an optical system employed in an optical pickup head of an information recording and reproducing apparatus for a magnetooptical disk ;
Fig 7 is a diagram showing the configuration of an optical system used in an-optical pickup head of an information recording and reproducing apparatus for a magnetooptical disk in a second embodiment according to the present invention;
Figs. 8a, 8b, and 8c are a plan view, a front view, and a side view of a prism utilized in the optical head of Fig. 29;
Fig. 9 is a perspective view illustratively showing the structure of an optical system used in an optical pickup head of an information recording and reproducing apparatus for a magnetooptical disk in a third embodiment according to the present invention;
Fig. 10 is a plan view schematically showing a grating coupler adopted in a conventional optical pickup device; and
Fig. 11 is a perspective view showing an optical system of a conventional optical pickup device.

### DESCRIPTION OF THE PREFERRED EMBODIMENTS

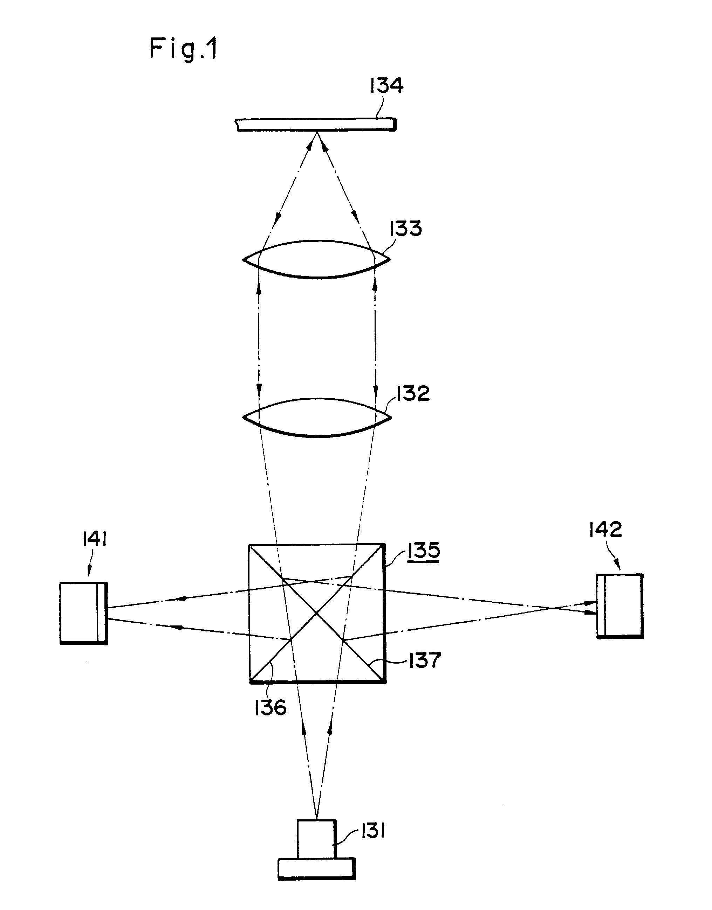

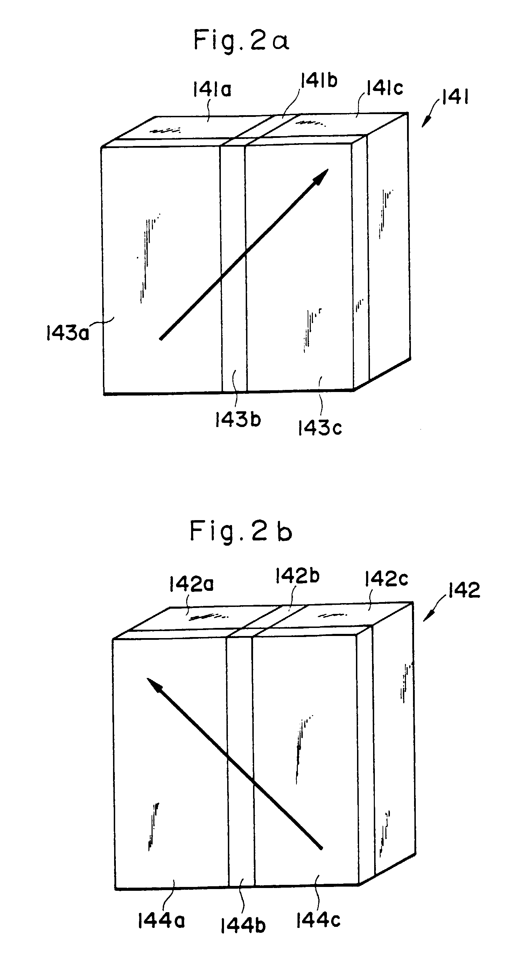

Fig. 1 and Figs. 2a and 2b show a schematic diagram showing an optical pickup device, that is the constitution of an optical pickup head used to record information on and to read information a magnetooptical disk.

The optical head includes a semiconductor laser 131 and a focusing optical system for converging onto a surface of a magnetooptical disk 134 divergent light emitted from the laser 131. The optical system comprises a collimation lens 132 for collimating the emitted light and an objective 133 for converging the collimated light.

A composite beam splitter 135 is disposed in an optical path of the divergent light between the semiconductor laser 131 and tne collimation lens 132. The composite beam splitter 135 has two reflection surfaces 136 and 137, which are arranged to be orthogonal to each other. Each of the reflection surfaces is inclined by 45° with respect to an optical axis of the focusing optical system.

The compsite beam splitter 135 may be constituted with four dielectric blocks (e.g. glass prisms). Each of the blocks includes surfaces respectively coated with reflection films so as to develop functions respectively of the reflection surfaces 136 and 137. The combined four dielectric blocks are bonded to each other. The reflection surfaces 136 and 137 are configured so as to pass therethrough to a possible extent the emission light from the semiconductor laser 131 and to refiect a portion (for example, 10%) of a light reflected from the magnetooptical disk 134. In this regard, the optical reflection efficiency of each of the reflection surfaces 136 and 137 does not depend on the polarization of light.

The divergent light produced from the semiconductor laser 131 is transmitted through the composite beam splitter 135 to be converged by the focusing optical system onto the magnetooptical disk 134. Light reflected from the disk 134 is converged by the focusing optical system. While the reflection light is being converged through the optical system, portions thereof are reflected by the reflection surfaces 136 and 137 of the composite beam splitter 135, respectively. The reflected light is then respectively received by photosensors 141 and 142 arranged respectively on the front and rear sides of associated focusing points of the reflected light.

The photosensor 141 includes, as shown in a magnified perspective view of Fig. 2a, three photodiodes 141a, 141b, and 141c which are electrically independent of each other (three-partition photodiode unit) . These photodiodes 141a to 141c are arranged in a line such that the central photodiode 141 has a light receiving surface smaller than those of the other ones. On the front surfaces respectively of the photodiodes 141a, 141b, and 141c, there are disposed analyzers 143a, 143b, and 143c, respectively.

The photosensor 142 also includes, as can be seen from a magnified view of Fig. 2b, three photodiodes 142a, 142b, and 142c which are electrically independent of each other and which are linearly arranged so that on the front surfaces respectively of the photodiodes 142a, 142b, and 142c, there are disposed analyzers 144a, 144b, and 144c, respectively.

The analyzers 143a to 143c arranged on the front surface of the photosensor 141 are associated with an identical polarization direction. Moreover, the analyzers 144a to 144c disposed on the front surface of the photosensor 142 are related to an identical polarization direction. The polarization direction of the analyzers 143a to 143c is set to be orthogonal to that of the analyzers 144a to 144c as denoted by arrow marks respectively in Figs. 24a and 24b. The emission light from the semiconductor laser 131 has a polarization direction inclined by 45° with respect to each of the polarization directions respectively of the analyzers 143a to 143c and 144a to 144c.

Let us assume here that the photodiodes 141a, 141b, and 141c output signals having signal levels 141A, 141B, and 141C, respectively; moreover, the photodiodes 142a, 142b, and 142c are associated with signal output levels 142A, 142B, and 142C, respectively. When data recorded on a magnetooptical disk 134 is read therefrom, a readout signal has a signal level computed as (141A + 141B + 141C) - (142A + 142B + 142C).

Moreover, the output signals from the photosensors 141 and 142 are employed to produce a focusing error signal and a tracking error signal.

The focusing error signal is generated, for example, in a beam sizing method. Namely, the light beams received respectively by the photosensors 141 and 142 are processed so as to create therefrom signals designating magnitudes of the respective beams. Based on a signal difference therebetween, a focusing error signal is attained such that the output signal level thereof is represented as (141A + 141C - 141B) - (142A + 142C - 142B).

Moreover, the tracking error signal is produced, for example, according to a push-pull detection method. In this procedure, either one of the output signals respectively from the photosensors 141 and 142 is adopted for the signal generation such that the output level of the tracking error signal is represented as (141A - 141C) or (142A - 142C).

When the optical recording medium is impiemeted in the form of, for example, an optical disk or an optical card, the optical head configurations shown in Figs. 23, 24a, and 24b are applicable without any modifications thereof, where the analyzers 143a to 143c and 144a to 144c are to be omitted. In this situation, the output signal level of the readout signal is expressed as (141A + 141B + 141C) + (142A + 142B + 142C), (141A + 141B + 141C), or (142A + 142B + 142C).

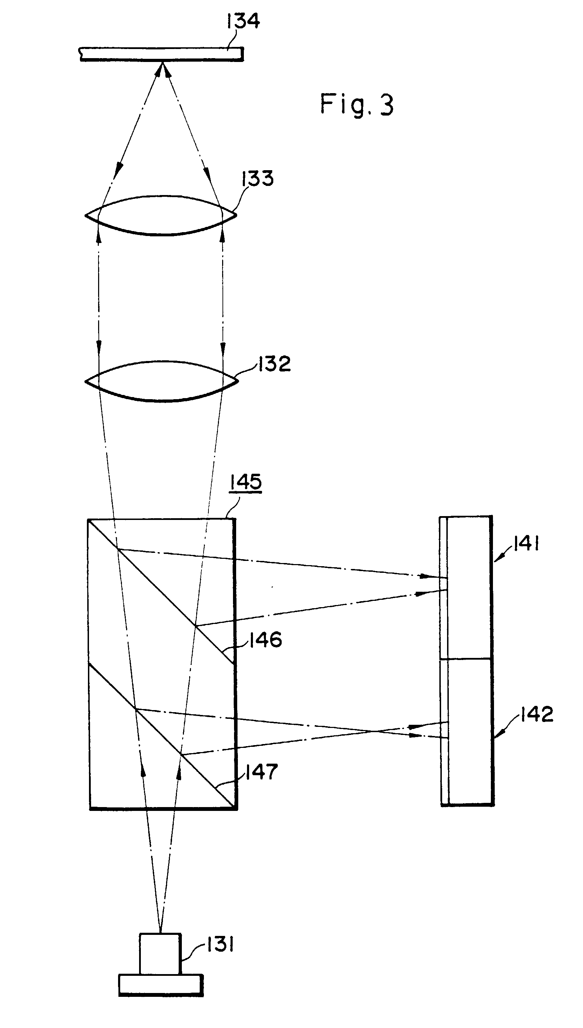

Fig. 3 shows the structure of an optical head employed in an information recording and reproducing apparatus for a magnetooptical disk. In this diagram, the same elements and constituent components as those of Figs. 1, 2, and 2b are assigned with the same reference numerals.

Between a semiconductor laser 131 and a collimation lens 132, there is arranged a composite beam splitter 145 having two reflection surfaces 146 and 147. These surfaces are separatedly disposed along a direction of an optical axis of the semiconductor laser 131 with an appropriate distance therebetween for the following purpose. Namely, with the provision above, it is possible to arranged in the optical axis direction a photosensor 141 located on a front side of a focal point of converged light which has been reflected from a magnetooptical disk 134 and then from the reflection surface 146 and a photosensor 142 located on a rear side of a focal point of a converged light which has been reflected from a magnetooptical disk 134 and thereafter from the reflection surface 147. Naturally, when necessary, the positions respectively of the photosensors 141 and 142 may be shifted in a direction orthogonal to the optical axis direction.

Of the reflection light from the magnetooptical disk 134, only a light which has passed through the reflection surface 146 and which has reflected from the reflection surface 147 is received by the photosensor 142. In order to substantially equalize to each other the quantities of light to be respectively received by the photosensors 141 and 142, the light reflection efficiency (e.g. 9%) of the reflection surface 146 is set to be slightly smaller than that (e.g. 10%) of the reflection surface 147. The reflection efficiency of each surface above is almost compeltely independent of the polarization of light. The composite beam splitter 145 having the reflection surfaces 146 and 147 can be constituted with a combination of dielectric blocks each having reflection surfaces equivalent to the surfaces 146 and 147.

In the optical pickup head above, an information readout signal, a focusing error signal, and a tracking error signal can be created in a similar manner described in conjunction with the fourth embodiment.

Moreover, when an optical disk or the like is employed as the optical-recording medium, it is natural that the analyzers need not be disposed in the photosensors 141 and 142.

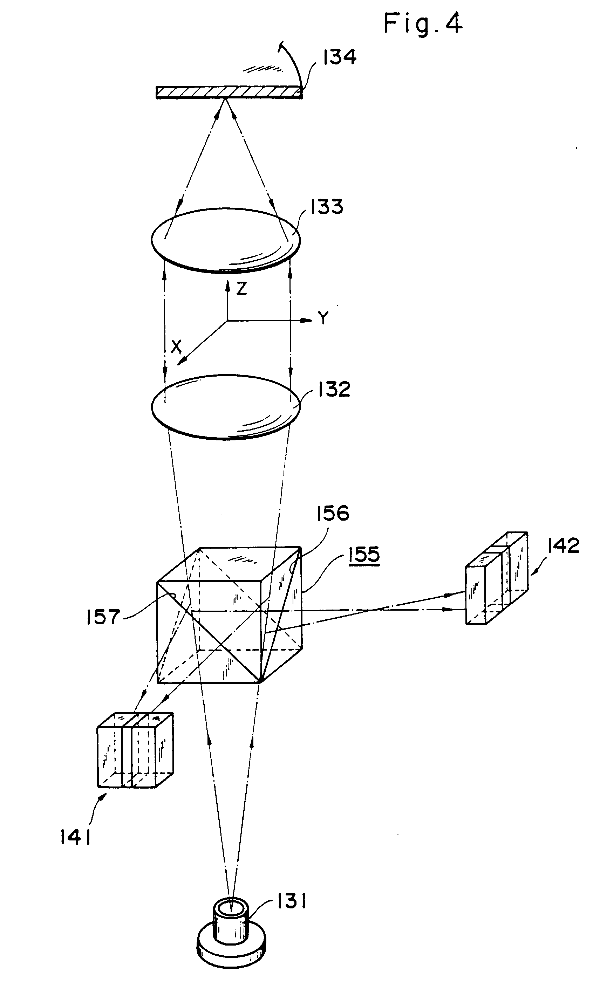

Fig. 4 shows the configuration of an optical head of an information recording and reproducing apparatus for a magnetooptical disk in a first embodiment according to the present invention. In this constitution, the same constituent elements as that shown in Fig. 1 are assigned with the same reference numerals and a redundant description thereof will be avoided.

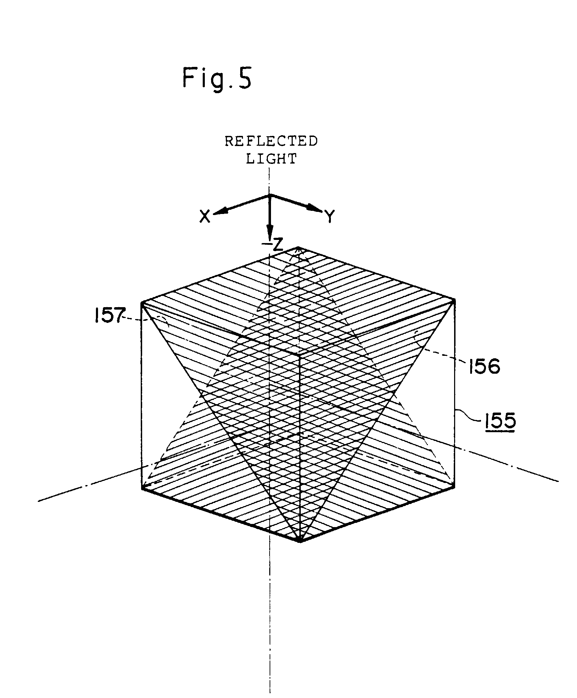

Between a semiconductor laser 131 and a collimation lens 132, there is disposed a composite polarization beam splitter 155 including polarizing reflection surfaces 156 adn 157. Fig. 5 shows a magnified view of the structure of the composite polarization beam splitter 155 in which the two polarizing reflection surfaces 156 and 157 are indicated as hatching portions.

In this diagram, let us assume that the reflection light from a magnetooptical disk 134 is incident to the composite polarizing beam splitter 155 in a direction denoted as -Z direction. As shown here, two directions orthogonal to the Z direction are assumed to be designated as X and Y directions, respectively. The polarizing reflection surface 156 is inclined by 45° relative to each of the X and Z directions whereas the polarizing reflection surface 157 is skewed by 45° relative to each of the Y and Z directions. In consequence, these surfaces 156 and 157 are disposed to be orthogonal to each other.

Each of the polarizing reflection surfaces 156 and 157 is configured such that the reflection efficiency of an S-polarized light component (with a polarization direction parallel to the reflection surface) is set to an appropriate value not more than 100% and the transmission efficiency of a P-polarized light component is substantially 100%. In consequence, the two orthogonal polarized light components of the reflection light from the magnetooptical disk 134 are reflected respectively by the polarizing reflection surfaces 156 and 157 to be received by the photosensors 141 and 142 respectively associated therewith. In this connection, the photosensors 141 and 142 need not be necessarily provided with the analyzers; however, there may be adopted an analyzer for passing therethrough the polarization direction component of the incident light.

The composite beam splitter 155 above can be constructed by combining four blocks with each other, each block having polarizing reflection surfaces coated with polarizing films, respectively.

The polarization direction of the semiconductor laser 131 is inclined by 45° with respect to each of the two orthogonal polarization directions associated with the light polarization and separation conducted by the composite plarizing beam splitter 155.

Also in this configuration, a readout signal, a focusing error signal, and a tracking error signals are obtained in the same fashion as for the embodiments above.

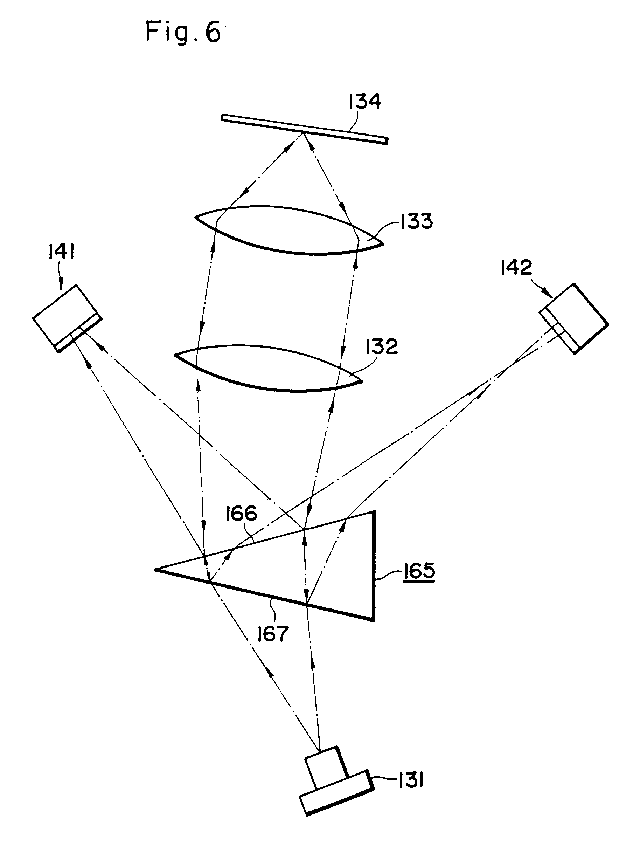

Fig. 6 shows the constitution of an optical pickup head of an information recording and reproducing apparatus for a magnetooptical disk. In the structure of this embodiment, the same constituent elements as those of the embodiments above are assigned with the same reference numerals.

The optical head comprises a smiconductor laser 131 and a converging optical system for focusing onto a surface of a magnetooptical disk 134 a divergent light generated from the smiconductor laser 131. The focusing optical system includes a collimation lens 132 for collimating the diverging light and an objective 133 for converging the collimated light.

The configuration includes a prism 165 in an optical path of the divergent light between the semiconductor laser 131 and the collimation lens 132. The prism 165 is of a type easily found on the market and has two surfaces 166 and 167 each coated with a reflection film. Lights reflected from the reflection surfaces (first and second reflection surfaces) 166 and 167 are received by photosensors 141 and 142, respectively. It is favorable to set the reflection efficiency of each of these reflection surfaces such that for light incident thereto, substantially an identical quantity of light is reflected therefrom. The reflection efficiency of each reflection surface does not depend on the polarization of light.

Divergent light created from the semiconductor laser 131 is refracted once by each of the two surfaces 166 and 167 of the prism 165 to be converged through the focusing optical system onto a surface of the magnetooptical disk 134. Light reflected from the disk 134 is then focused by the focusing optical system. A portion of the converged reflection light is reflected by the first reflection surface 166 to be incident to the photosensor 141 disposed at a position on a front side of a focusing point of the correctly focused reflection light. Of the reflection light from the magnetooptical disk 134, light which has passed through the first reflection surface 166 is transmitted via the prism 165 such that a portion of the transmitted light is reflected from the second reflection surface 167 to be received by the photosensor 142 located at a position on a rear side of a focal point of the properly focused reflection light.

The photosensors 141 and 142 are configured as shown in Figs. 2a and 2b, respectively. Moreover, as described above, based on signals produced from the photosensors 141 and 142, a data readout signal, a focusing error signal, and a tracking error signal are attained in the same manner.

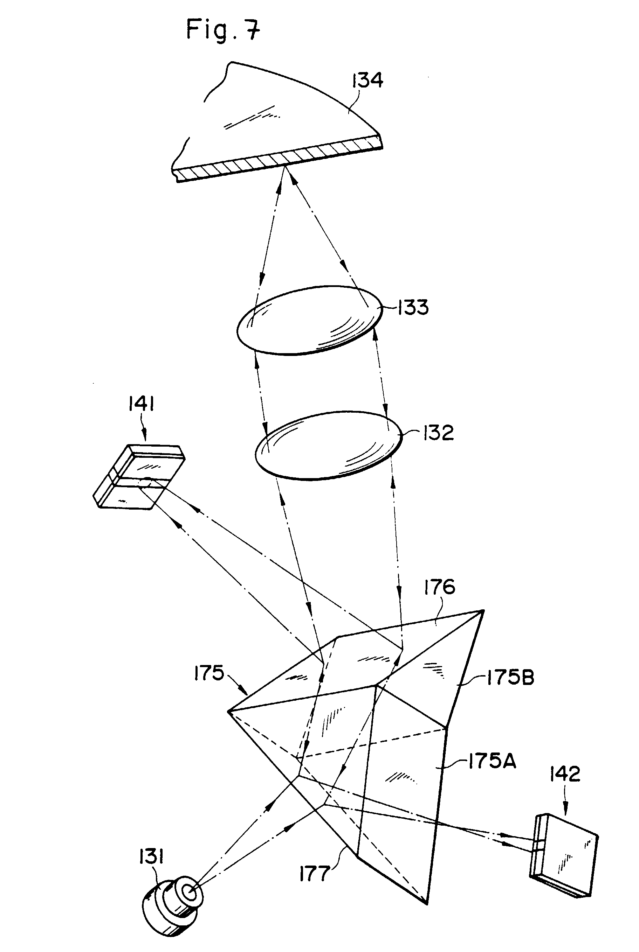

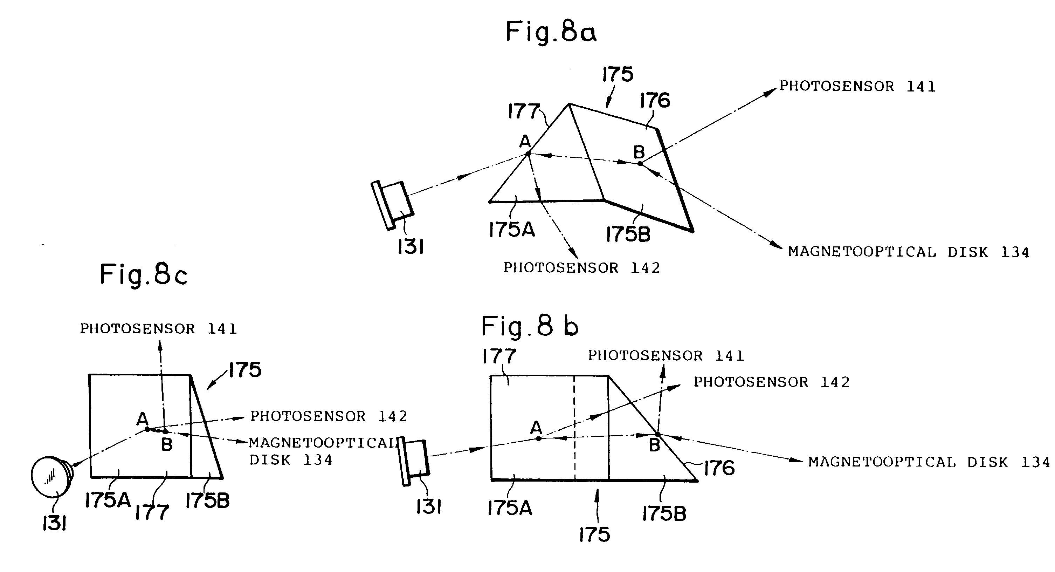

Fig. 7 and Figs. 8a, 8b, and 8c show the configuration of an optical head of an information recording and reproducing apparatus for a magnetooptical disk in a second embodiment according to the present invention. Also in these diagrams, the same components as those shown in the above embodiments are assigned with the same reference numerals for simplification.

In the constitution, there is disposed a prism 175 having a considerably complex shape between a semiconductor laser 131 and a collimation lens 132.

For an easy understanding of the complicated shape of the prism 175, Figs. 8a to 8c show a plan view, a front view, and a side view of the prism 175. Furthermore, these diagrams include light proparation directions in the prism 175 of divergent light emitted from the semiconductor laser 131 and reflection light from a magnetooptical disk 134, the directions being indicated with optical axes of the respective components. Points A and B respectively denote an incident point and an emission point and a reflection point assoiciated with the divergent and reflection light.

For simplification, let us consider that the prism 175 is constituted with two portions 175A and 175B. The portion 175A has a contour of a trigonal prism of which a surface facing the semiconductor laser 131 is assumed to be a second reflection surface 177. The portion 175B is a pentahedron having two lozenge-shaped surfaces, two triangular surface, and a rectangular surface. The portion 175B is brought into contact with the portion 175A on the rectangular surface of the portion 175B. One of the lozenge-shaped surfaces facing the magnetooptical disk 134 is assumed to be a first reflection surface 176. The reflection surfaces 176 and 177 are also constituted such that each thereof refelects substantially an identical quantity of the reflection light incident thereto so as to supply almost the same quantity of light to each of the photosensors 141 and 142. The reflection surfaces 176 and 177 develop functions almost completely independent of the polarization of light.

Diverging light illuminated from the semiconductor laser 131 enters the prism 175 from the second reflection surface 177. (point A) of the prism 175 to be refracted therein and is then emitted from the first surface 176 (point B) of the prism 175. The emission light from the prism 175 is converged onto a surface of the magnetooptical disk 134 by a focusing optical system comprising a collimation lens 132 and an objective 133. The light is then reflected on the optical disk 134 so that the reflection light is again converged by the focusing optical system. The reflection light, while being thus converged, is reflected on the first reflection surface 176 (point B) to be received by a photosensor 141 located at a position on a front side of a focusing position of the reflection light appropriately focused. Moreover, of the light reflected from the magnetooptical disk 134, light which has passed through the first reflection surface 176 is transmitted through the prism 175 such that a portion thereof is reflected on the second reflection surface 177 (point A). The reflected light is delivered through the prism 175 to be emitted from a surface of the prism portion 175A so as to be incident to a photosensor 142 disposed at a position on a rear side of the focusing position.

In this opitcal pickup head, an information readout signal, a focusing error signal, and a tracking error signal are generated in the same manner as for the embodiments above.

In a case where an optical disk or the like is utilized as the optical recording medium, it is to be understood that the analyzers need not be disposed for the photosensors 141 and 142.

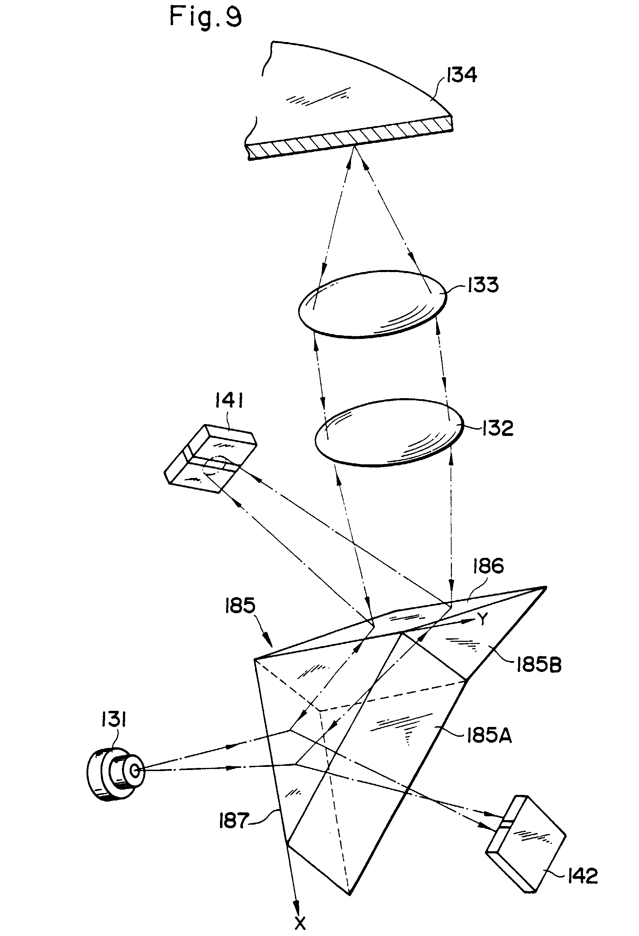

Fig. 9 shows the configuration of an optical pickup head of an information recording and reproducing apparatus for a magnetooptical disk in a third embodiment according to the present invention. In this diagram, the same components are similarly assigned with the same reference numerals and a duplicated description thereof will be avoided.

In the constitution, a prism 175 having two polarizing reflection surfaces 186 and 187 is adopted between a semiconductor laser 131 and a collimation lens 132. The polarizing prism 175 has a contour which is basically the same as that of the prism 165 of Fig. 7. The prism 175 is constituted with portions 185A and 185B and is structurally different from the prism 175 of Fig. 7 in that a polarizing film is disposed on each of the polarizing reflection surfaces 186 and 187 respectively related to the reflection surfaces 176 and 177. Moreover, as can be seen from Fig. 9, a direction Y along the first polarizing reflection surface 186 is orthogonal to a direction X along the second polarizing reflection surface 187.

Each of the polarizing reflection surfaces 186 and 187 is constituted such that the reflection efficiency of an S-polarized light component (with a polarization direction parallel to the polarizing reflection surface) is set to an appropriate value not exceeding 100% and the transmission efficiency of a P-polarized light component is substantially 100%. Consequently, the two orthogonal polarized light components of the reflection light from the magnetooptical disk 134 are reflected respectively by the polarizing reflection surfaces 186 and 187 to enter the photosensors 141 and 142 respectively associated therewith. In this regard, the analyzers need not necessarily be disposed for the photosensors 141 and 142; however, there may be naturally adopted an analyzer for passing therethrough the polarization direction component of the incident light.

It is naturally to be understood that in order to substantially equalize to each other the reflection light quantities to be incident to the two photosensors 141 and 142, the reflection efficiency of the S-polarized component is favorably determined in advance for each of the polarizing reflection surfaces 186 and 187.

The polarization direction of the semiconductor laser 131 is skewed by 45° relative to each of the two orthogonal polarization directions related to the light polarization and separation accomplished by the polarizing prism 185.

In this configuration of the optical pickup head, a readout signal, a focusing error signal, and a tracking error signals are also produced in the same fashion as for the embodiments above.

## Claims

1. An optical device for extracting information represented by polarized light coming from an optical magneto-optical recording medium (134), the optical device comprising a composite polarizing beam splitter (155, 175, 185) having two reflection surfaces (156, 157, 176, 177, 186, 187) for reflecting a portion of the polarized light from the recording medium, and further comprising two photosensors (141, 142) for respectively receiving two light beams reflected from said composite beam splitter,
charcterized in that
said composite polarizing beam splitter (155, 175, 185) has two polarizing reflection surfaces (156, 157, 176, 177, 186, 187) for separating a portion of the polarized light from the recording medium into two polarized reflection light components having directions of polarization orthogonal to each other and for reflecting these polarized reflection light components into two different directions, and
said two photosensors (141, 142) are respectively receiving said two polarized light components separated by said composite polarization beam splitter.

2. An optical device in accordance with claim 1 characterized in that said two polarizing reflection surfaces (156, 157) of said composite polarization beam splitter (155) are substantially orthogonal to each other.

3. An optical device in accordance with claim 1 characterized in that said two reflection surfaces (176, 177, 186, 187) are disposed along a direction of an optical axis of the polarized light from the recording medium (134).

4. An optical device in accordance with claim 1 characterized in that said composite beams splitter is a prism (185) having said two polarization reflection surfaces (186, 187) as surfaces thereof.

5. An optical device in accordance with claim 4 characterized in that said polarization reflection surfaces (186, 187) of said prism (185) are orthogonal to each other.

6. An optical device in accordance with claim 1 or 4 characterized in that said optical device further comprises;
a light emitting element (131); and
a focusing optical system (132, 133) for converging light irradiated from said light emitting element onto said recording medium (134) and for focusing reflection light from said recording medium
wherein said composite beam splitter (155, 175, 185) passes therethrough at least a portion of the light emitted from said light emitting element, and the polarized light from the recording medium is light reflected from the recording medium.

7. An optical device in accordance with claim 6 characterized in that said focusing optical system (132, 133) is disposed between said composite polarization beam splitter (155, 175, 185) and the recording medium.

8. An optical device in accordance with claim 6 characterized in that said composite beam splitter (155, 175, 185) is disposed between said light emitting element (131) and said focusing optical system (132, 133).

9. An optical device in accordance with claim 8 characterized in that
said focusing optical system includes a collimation lens (132) and an objective (133), and
said collimation lens (132) is disposed between said objective (133) and said composite beam splitter (155, 175, 185).

10. An optical device in accordance with claim 1 characterized in that said optical device further includes two analyzers (143a, 143b, 143c, 144a, 144b, 144c) respectively disposed on front sides of said photosensors (141, 142), said analyzers respectively having polarization directions which are orthogonal to each other.

## Revendications

1. Un dispositif optique destiné à extraire une information représentée par une lumière polarisée venant d'un support d'enregistrement magnéto-optique (1234), le dispositif optique comprenant un diviseur de faisceau polarisant composite (155, 175, 185) qui comporte deux surfaces de réflexion (156, 157, 176, 177, 186, 187) pour réfléchir une partie de la lumière polarisée venant du support d'enregistrement, et comprenant en outre deux photo-détecteurs (141, 142) pour recevoir respectivement deux faisceaux lumineux réfléchis à partir du diviseur de faisceau composite,
caractérisé en ce que
ledit diviseur de faisceau composite (155, 175, 185) comporte deux surfaces de réflexion polarisantes (156, 157, 176, 177, 186, 187) pour séparer une partie de la lumière polarisée en deux composantes lumineuses polarisées de réflexion venant du support d'enregistrement, à directions de polarisation orthogonales entre elles, et pour réfléchir dans deux directions différentes ces composantes lumineuses polarisées de réflexion, et
ledits photo-détecteurs (141, 142) reçoivent respectivement ces deux composantes lumineuses polarisées séparées par ledit diviseur de faisceau polarisant composite.

2. Un dispositif optique selon la revendication 1 caractérisé en ce que lesdites deux surfaces de réflexion polarisantes (156, 157) dudit diviseur de faisceau polarisant composite (155) sont sensiblement orthogonales entre elles.

3. Un dispositif optique selon la revendication 1 caractérisé en ce que lesdites deux surfaces de réflexion (176, 177, 186, 187) sont disposées le long d'une direction d'un axe optique de la lumière polarisée venant dudit support d'enregistrement (134).

4. Un dispositif optique selon la revendication 1 caractérisé en ce que ledit diviseur de faisceau composite est un prisme (185) tel que lesdites deux surfaces de réflexion polarisantes (186, 187) sont des surfaces de ce prisme.

5. Un dispositif optique selon la revendication 1 caractérisé en ce que lesdites surfaces de réflexion polarisantes (186, 187) dudit prisme (185) sont orthogonales entre elles.

6. Un dispositif optique selon la revendication 1 ou 4 caractérisé en ce que ledit dispositif optique comprend en outre:
un élément émetteur lumineux (131), et
un système de focalisation (132, 133) pour faire converger sur ledit support d'enregistrement (134) une lumière rayonnée par ledit élément émetteur lumineux et pour focaliser une lumière de réflexion venant dudit support d'enregistrement,
ledit diviseur de faisceau composite (155, 175, 185) laisse passer au moins une partie de la lumière émise par ledit élément émetteur, et la lumière polarisée venant dudit support d'enregistrement étant une lumière réfléchie à partir du support d'enregistrement.

7. Un dispositif optique selon la revendication 6 caractérisé en ce que ledit système optique de focalisation (132, 133) est disposé entre ledit diviseur de faisceau polarisant composite (155, 175, 185) et le support d'enregistrement optique.

8. Un dispositif optique selon la revendication 6 caractérisé en ce que ledit diviseur de faisceau composite (155, 175, 185) est disposé entre ledit élément émetteur lumineux (131) et ledit système optique de focalisation (132, 133).

9. Un dispositif optique selon la revendication 6 caractérisé en ce que
ledit système optique de focalisation (132, 133) inclut une lentille de collimation (132) et un objectif (133), et
ladite lentille de collimation (132) est disposée entre ledit objectif (133) et ledit diviseur de faisceau composite (155, 175, 185).

10. Un dispositif optique selon la revendication 6 caractérisé en ce que ledit dispositif optique inclut en outre deux analyseurs (143a, 143b, 143c, 144a, 144b, 144c) disposés respectivement sur des côtés frontaux desdits photo-détecteurs (141, 142), les directions respectives de polarisation desdits analyseurs étant orthogonales entre elles.

## Patentansprüche

1. Optische Vorrichtung zum Abfragen von Information, die durch polarisiertes Licht dargestellt wird, welches von einem optischen/magnetooptischen Aufzeichnungsmedium (134) herkommt, wobei die optische Vorrichtung einen zusammengesetzten polarisierenden Strahlenteiler (155, 175, 185) mit zwei Reflexionsflächen (156, 157, 176, 177, 186, 187) zum Reflektieren eines Teils des polarisierten Lichts vom Aufzeichnungsmedium aufweist, und ferner zwei Photosensoren (141, 142) für den Empfang von am zusammengesetzten Strahlenteiler reflektierten zwei Lichtbündeln aufweist,
dadurch gekennzeichnet, daß
der zusammengesetzte polarisierende Strahlenteiler (155, 175, 185) zwei polarisierende Reflexionsflächen (156, 157, 176, 177, 186, 187) zum Trennen eines Teils des polarisierten Lichts vom Aufzeichnungsmedium in zwei polarisierte Reflexionslichtkomponenten mit zueinander senkrechten Polarisationsrichtungen und zum Reflektieren dieser polarisierten Reflexionslichtkomponenten in zwei unterschiedliche Richtungen aufweist, und
die beiden Photosensoren (141, 142) die durch den zusammengesetzten Polarisationsstrahlenteiler getrennten zwei polarisierten Lichtkomponenten empfangen.

2. Optische Vorrichtung nach Anspruch 1, dadurch gekennzeichnet, daß die beiden polarisierenden Reflexionsflächen (156, 157) des zusammengesetzten Polarisationsstrahlenteilers (155) im wesentlichen orthogonal zueinander sind.

3. Optische Vorrichtung nach Anspruch 1, dadurch gekennzeichnet, daß die beiden Reflexionsflächen (176, 177, 186, 187) längs einer Richtung einer optischen Achse des polarisierten Lichts vom Aufzeichnungsmedium (134) angeordnet sind.

4. Optische Vorrichtung nach Anspruch 1, dadurch gekennzeichnet, daß der zusammengesetzte Strahlenteiler ein Prisma (185) mit den beiden Polarisationsreflexionsflächen (186, 187) als Oberflächen desselben ist.

5. Optische Vorrichtung nach Anspruch 4, dadurch gekennzeichnet, daß die Polarisationsreflexionsflächen (186, 187) des Prismas (185) orthogonal zueinander sind.

6. Optische Vorrichtung nach Anspruch 1 oder 4, dadurch gekennzeichnet, daß die optische Vorrichtung ferner
ein Lichtabgabeelement (131), und
ein fokussierendes optisches System (132, 133) zum Konvergentmachen von Licht, das von dem Lichtabgabeelement auf das Aufzeichnungsmedium (134) eingestrahlt wird, und zum Fokussieren von Reflexionslicht des Aufzeichnungsmediums aufweist,
wobei der zusammengesetzte Strahlenteiler (155, 175, 185) wenigstens einen Teil des von dem Lichtabgabeelement abgegebenen Lichts durchläßt und das polarisierte Licht vom Aufzeichnungsmedium am Aufzeichnungsmedium reflektiertes Licht ist.

7. Optische Vorrichtung nach Anspruch 6, dadurch gekennzeichnet, daß das fokussierende optische System (132, 133) zwischen dem zusammengesetzten Strahlenteiler (155, 175, 185) und dem Aufzeichnungsmedium angeordnet ist.

8. Optische Vorrichtung nach Anspruch 6, dadurch gekennzeichnet, daß der zusammengesetzte Strahlenteiler (155, 175, 185) zwischen dem Lichtabgabeelement (131) und dem fokussierenden optischen System (132, 133) angeordnet ist.

9. Optische Vorrichtung nach Anspruch 8, dadurch gekennzeichnet, daß
das fokussierende optische System eine Kollimationslinse (132) und ein Objektiv (133) enthält und
die Kollimationslinse (132) zwischen dem Objektiv (133) und dem zusammengesetzten Strahlenteiler (155, 175, 185) angeordnet ist.

10. Optische Vorrichtung nach Anspruch 1, dadurch gekennzeichnet, daß die optische Vorrichtung ferner zwei Analysatoren (143a, 143b, 143c, 144a, 144b, 144c) enthält, die an Vorderseiten der Photosensoren (141, 142) angeordnet sind, wobei die Analysatoren Polarisationsrichtungen aufweisen, die orthogonal zueinander sind.
